# EUROPÄISCHE PATENTSCHRIFT

(11) **EP 1 068 042 B1**
(45) Veröffentlichungstag und Bekanntmachung des Hinweises auf die Patenterteilung: **04.05.2005**
(21) Anmeldenummer: 99916894.1
(22) Anmeldetag: 27.03.1999
(51) Int. Cl.: B23K 11/30

(54) **SCHWEISSELEKTRODE MIT EINER ANORDNUNG ZUR ULTRASCHALLEINBRINGUNG ZUR PRÜFUNG VON SCHWEISSVERBINDUNGEN**
WELDING ELECTRODE WITH AN ARRANGEMENT FOR INTRODUCING ULTRASOUND IN ORDER TO CHECK WELD JOINTS
ELECTRODE DE SOUDAGE AVEC DISPOSITIF DE MISE EN OEUVRE D'ULTRASONS POUR LE CONTROLE DE JOINTS SOUDES

(30) Priorität: 03.04.1998 DE 19815041
(43) Veröffentlichungstag der Anmeldung: 17.01.2001
(73) Patentinhaber: Vogt Werkstoffprüfsysteme GmbH, 30938 Burgwedel (DE)
(72) Erfinder: VOGT, Göran, D-30938 Burgwedel (DE)
(74) Vertreter: König, Norbert, Dipl.-Phys. Dr.
(86) Internationale Anmeldenummer: PCT/EP1999/002119
(87) Internationale Veröffentlichungsnummer: WO 1999/051384

(56) Entgegenhaltungen:
- AU-B- 571 116
- DE-A- 4 325 858
- US-A- 3 487 191
- US-A- 5 552 573

## Beschreibung

Die Erfindung betrifft eine Schweißelektrode mit einer Anordnung zur Ultraschalleinbringung zur Prüfung von Schweißverbindungen gemäß Oberbegriff des Anspruchs 1.

Das Prüfen von Widerstandsschweißverbindungen mittels Ultraschall ist allgemein bekannt, bspw. durch die Fachzeitschrift "Schweißen & Schneiden", 1997, Heft 1, Seiten 15 ff. Hierbei wird der Schweißbereich, also derjenige Bereich des zu schweißenden Werkstückes, auf den die Schweißelektroden einwirken, mit Ultraschallwellen aus einem Ultraschallsender beaufschlagt. Die Ultraschallwellen werden entweder nach Durchschallung des Schweißbereiches oder Reflexion an diesem mittels eines Ultraschallempfängers empfangen. Durch Auswertung der empfangenen Ultraschallwellen lassen sich Rückschlüsse auf den Temperaturverlauf im zu schweißenden Werkstück und auf das Wachstum der Schweißlinse ziehen. Besonders vorteilhaft ist hierbei, daß die Prüfung der Schweißverbindung noch während des Schweißvorganges erfolgt, so dass Parameter des Schweißprozesses, bspw. der Schweißstrom oder die Schweißzeit, in Abhängigkeit von der Auswertung der empfangenen Ultraschallsignale angepasst werden können. Auf diese Weise sind fehlerhafte Schweißverbindungen zuverlässig vermieden.

Aus der DE 14 73 400 und der ZIS-Mitteilung Heft 1/68, S. 66 ist eine Schweißelektrode mit einer Anordnung zur Ultraschalleinbringung zur Prüfung von Schweißverbindungen, insbes. Widerstandsschweißverbindungen, der eingangs genannten Art bekannt. Die Schweißelektrode ist mit einem durch eine Sackbohrung gebildeten Kühlkanal versehen, welcher von Kühlflüssigkeit durchströmt wird. Im Kühlkanal ist ein Ultraschallsender angeordnet, welcher zur Beaufschlagung des Schweißbereiches mit Ultraschallwellen diese Ultraschallwellen axial in den Kühlkanal einstrahlt. Ein beabstandet von dem Schweißbereich angeordneter Ultraschallempfänger dient der Aufnahme der durch den Schweißbereich gelaufenen Ultraschallwellen. Nachteilig bei dieser bekannten Anordnung ist, dass die Kühlwasserströmung durch den Ultraschallsender gestört wird. Nachteilig ist ferner, dass die elektrischen Zuleitungen des Ultraschallsenders bis in die Elektrode geführt werden müssen und wegen des Kühlwassers sorgfältig isoliert werden müssen. Ferner ist nachteilig, dass die Montage, Demontage und der Austausch des Ultraschallsenders mühsam sind.

Durch die EP 2 84 177 A2 ist eine Anordnung zur Ultraschalleinbringung bei der Prüfung von Widerstandsschweißverbindungen bekannt, die Schweißelektroden mit Elektrodenkappen und einen Ultraschallsender zur Beaufschlagung des Schweißbereiches mit Ultraschallwellen aufweist. Der Ultraschallsender ist innenseitig am Boden der Elektrodenkappe angeordnet und erzeugt Ultraschallsignale mit einer Frequenz von ca. 5 MHz. Die Ultraschallsignale werden nach Durchschallung des Schweißbereiches von einem Ultraschallempfänger empfangen, der in einer während des Schweißvorganges gegenüberliegenden Schweißelektrode innenseitig an deren Elektrodenkappe angeordnet ist. Ähnliche Anordnungen sind auch durch US 3 384 733 und DE-AS 2 655 415 B2 bekannt.

Ein Nachteil der bekannten Anordnungen besteht darin, dass bei Ersetzung der Elektrodenkappe, die ein Verschleißteil darstellt, der Ultraschallsender abgenommen und an der neuen Elektrode befestigt werden muss. Dies ist zeitaufwendig und verursacht Kosten.

Ein weiterer Nachteil der bekannten Anordnungen besteht darin, dass die elektrischen Zuleitungen für den Ultraschallsender durch den gesamten Elektrodenschaft bis hin zur Elektrodenkappe geführt werden müssen, was dadurch erschwert ist, dass ein Großteil des Innenraumes des Elektrodenschaftes in der Regel von Zuleitungen für Kühlmittel zur Kühlung der Elektrodenkappe eingenommen ist, so dass für die elektrischen Zuleitungen nur wenig Raum zur Verfügung steht. Außerdem müssen die elektrischen Zuleitungen des Ultraschallsenders gegen das Kühlwasser isoliert und der Ultraschallsender gegen das Eindringen von Kühlwasser abgedichtet werden. Die gleichen Nachteile betreffen den in entsprechender Weise innerhalb der anderen Schweißelektrode angeordneten Ultraschallempfänger.

Durch die DE 43 25 858 C2 ist eine Anordnung der betreffenden Art zur Ultraschalleinbringung bei der Prüfung von Widerstandsschweißverbindugnen bekannt, die eine eine Elektrodenkappe aufweisende Schweißelektrode und einen entfernt von der Elektrodenkappe angeordneten Ultraschallsender zur Beaufschlagung des Schweißbereiches mit Ultraschallwellen aufweist. Bei der bekannten Anordnung ist der Ultraschallsender am äußeren Elektrodenschaft der Elektrode oder an einem Elektrodenhalter der Schweißelektrode befestigt und beaufschlagt den Schweißbereich mit Scherwellen. Durch die Befestigung des Ultraschallsenders am äußeren Elektrodenschaft oder am Elektrodenhalter ist der Aufbau der bekannten Anordnung zwar vereinfacht, ein Nachteil besteht jedoch darin, dass bei der bekannten Anordnung aufgrund der Einkopplung der Schallwellen von der Außenfläche der Elektrode eine Beaufschlagung des Schweißbereiches mit longitudinalen Ultraschallwellen nicht möglich ist, da hierbei in erheblichem Maße eine Dämpfung der longitudinalen Ultraschallwellen eintreten und eine Auswertung der Ultraschallwellen nach Durchschallung des Schweißbereiches oder Reflexion an diesem erschweren würde.

Der Erfindung liegt die Aufgabe zugrunde, eine Schweißelektrode gemäß des Oberbegriffs des Anspruchs 1 so auszubilden, dass deren Aufbau sowie die Montage, Demontage und der Austausch des Ultraschallsenders vereinfacht ist und eine Beaufschlagung des Schweißbereiches mit longitudinalen Ultraschallwellen möglich ist.

Diese Aufgabe wird durch die im Anspruch 1 angegebene Erfindung gelöst.

Die erfindungsgemäße Lehre geht zunächst von der Erkenntnis aus, dass es im Sinne eines einfachen Aufbaus der Schweißelektrode von Vorteil ist, wenn der Ultraschallsender beabstandet vom Schweißbereich angeordnet ist. Hiervon ausgehend besteht der Grundgedanke der erfindungsgemäßen Lehre darin, die Ultraschallwellen axial in einen Kanal der Schweißelektrode einzustrahlen, der mit einem schallübertragenden Medium gefüllt ist, und den Ultraschallsender von außen an den Kühlkanal anzukoppeln. Auf diese Weise ist eine Beaufschlagung des Schweißbereiches auch mit longitudinalen Ultraschallwellen ermöglicht, ohne dass Schwächungen der Ultraschallwellen in einem Maße auftreten, dass die Auswertung der Ultraschallwellen nach Durchschallung des Schweißbereiches oder Reflexion an diesem beeinträchtigt ist.

Durch die Anordnung des Ultraschallsenders beabstandet vom Schweißbereich und durch dessen Ankopplung von außen an den Kühlkanal ist der Aufbau der erfindungsgemäßen Einrichtung vereinfacht, da es nicht erforderlich ist, die elektrischen Zuleitungen des Ultraschallsenders bis hin zur Elektrodenspitze oder -kappe zu führen und aufwendig zu isolieren. Durch die Anordnung außerhalb des Kühlkanals wird die Durchströmung des Kühlkanals der Schweißelektrode nicht mehr behindert. Die Montage, Demontage und der Austausch des Ultraschallsenders lassen sich einfacher durchführen.

Die erfindungsgemäße Ausbildung ermöglicht in einfacher und präziser Weise eine Beaufschlagung des Schweißbereiches mit Ultraschallwellen und durch Auswertung der Ultraschallwellen nach Durchschallung des Schweißbereiches oder Reflexion an diesem eine Prüfung der Schweißverbindung während oder nach Beendigung des Schweißvorganges und eine Steuerung der Parameter des Schweißvorgangs in Abhängigkeit von dieser Auswertung. Auf diese Weise sind fehlerhafte Schweißverbindungen vermieden oder zumindest verringert. Dies spart Zeit und damit kostenaufwendige Nacharbeiten.

Ein Ultraschallempfänger zum Empfangen der Ultraschallwellen nach Durchschallung des Schweißbereiches oder Reflexion an diesem kann als separates, von der Anordnung getrenntes Element gebildet sein. Gemäß einer Weiterbildung der erfindungsgemäßen Lehre weist die Anordnung jedoch einen Ultraschallempfänger zum Empfangen von Ultraschallwellen nach Durchschallung des Schweißbereiches oder Reflexion an diesem auf. Bei dieser Ausführungsform erfolgt sowohl die Beaufschlagung des Schweißbereiches mit Ultraschallwellen als auch der Empfang der Ultraschallwellen durch die erfindungsgemäße Anordnung, die noch eine Auswerteeinrichtung zur Auswertung der von dem Ultraschallempfänger empfangenen Signale aufweisen kann.

Grundsätzlich kann der Ultraschallsender von dem Kanal, in den er die Ultraschallwellen einstrahlt, durch ein Teil der Anordnung getrennt sein, sofern gewährleistet ist, dass sich die Dämpfung der Ultraschallwellen bei dem Durchtritt durch dieses Teil in Grenzen hält, innerhalb derer in der erforderlichen Weise noch eine Auswertung der Ultraschallwellen nach Durchschallung des Schweißbereiches oder Reflexion an diesem möglich ist.

Grundsätzlich kann der Ultraschallsender an beliebiger Stelle angeordnet sein, sofern in der erforderlichen Weise eine Einstrahlung der Ultraschallwellen in den Kanal sichergestellt ist.

Zweckmäßigerweise weist die Anordnung einen Ultraschallempfänger zum Empfangen von Ultraschallwellen nach Durchschallung des Schweißbereiches oder Reflexion an diesem auf.

Gemäß einer Ausführungsform ist bzw. sind der Ultraschallsender und/oder der Ultraschallempfänger wenigstens in einem Elektrodenhalter der Schweißelektrode oder einem damit verbundenen Teil aufgenommen. Auf diese Weise ist der Aufbau der Anordnung kompakt und robust gestaltet. Außerdem ist der Ultraschallsender aufgrund seiner Anordnung in dem Elektrodenhalter oder einem damit verbundenen Teil gegen mechanische Beschädigungen bei der Handhabung des Elektrodenhalters mit der Schweißelektrode geschützt.

Zweckmäßigerweise erstreckt sich der Kanal durch den Elektrodenhalter und/oder ein damit verbundenes Teil und/oder einen Elektrodenschaft der Schweißelektrode.

Anordnung und Geometrie des Kanals sind in weiten Grenzen wählbar. Eine vorteilhafte Weiterbildung sieht vor, dass der Kanal im Wesentlichen über seine gesamte Länge einen konstanten Querschnitt aufweist. Auf diese Weise sind über die gesamte Länge des Kanals dieselben Ausbreitungsbedingungen für die Ultraschallwellen erzielt. Der Kanal kann auch konisch oder abgebogen oder abgewinkelt ausgebildet sein.

Bei der vorgenannten Ausführungsform kann der Kanal in einem Teil mit einer zylindrischen Innenwandung gebildet sein, wie dies eine zweckmäßige Weiterbildung vorsieht.

Gemäß einer besonders vorteilhaften Weiterbildung der erfindungsgemäßen Lehre ist der Kanal wenigstens teilweise in einem sich durch den Elektrodenhalter und/oder durch ein mit dem Elektrodenhalter verbundenes Teil und/oder durch den Elektrodenschaft erstreckendes Rohrteil zur Zuführung von Kühlmittel zur Innenseite der Elektrodenkappe gebildet. Bei dieser Ausführungsform werden die Ultraschallwellen über die Kühlwasserstrecke der Schweißelektrode zugeführt.

Zweckmäßigerweise ist bzw. sind der Ultraschallsender und/oder der Ultraschallempfänger lösbar mit dem Elektrodenhalter verbunden. Bei dieser Ausführungsform ist in einfacher Weise sowohl ein Austausch eines schadhaften Ultraschallsenders als auch ein Ausbauen des Ultraschallsenders aus einem schadhaften Elektrodenhalter ermöglicht.

Bei der vorgenannten Ausführungsform kann der Elektrodenhalter auf seiner der Elektrodenkappe abgewandten Seite wenigstens eine mit dem Kanal in Verbindung stehende, vorzugsweise von der Außenseite der Anordnung zugängliche Ausnehmung zur Aufnahme des Ultraschallsenders und/oder des Ultraschallempfängers aufweisen. Auf diese Weise ist die Herstellung der erfindungsgemäßen Anordnung und ein Zugang zu dem Ultraschallsender, bspw. zu dessen Austausch, vereinfacht. Durch die Anordnung des Ultraschallsenders im inneren des Elektrodenhalters ist der Ultraschallsender gegen mechanische Beschädigungen zuverlässig geschützt.

Eine zweckmäßige Weiterbildung der vorgenannten Ausführungsform sieht vor, dass die Ausnehmung zur Längsachse des Kanals koaxial ist. Auf diese Weise ist bspw. dann, wenn eine Ausbreitung der Ultraschallwellen in Axialrichtung des Kanals erforderlich ist, der Zusammenbau der erfindungsgemäßen Anordnung vereinfacht, da durch die Position der Ausnehmung relativ zur Längsachse des Kanals die Position des Ultraschallsenders relativ zu dem Kanal vorgegeben ist.

Eine Weiterbildung der Ausführungsformen mit der Ausnehmung sieht vor, dass der Ultraschallsender und/oder der Ultraschallempfänger in diese Ausnehmung eingeklebt oder eingesteckt oder mit einem Außengewinde in ein Innengewinde der Ausnehmung eingeschraubt ist bzw. sind.

Grundsätzlich kann der Ultraschallsender eine beliebige, vorgegebene Art von Ultraschallwellen erzeugen. Vorteilhafterweise beaufschlagt der Ultraschallsender den Schweißbereich jedoch mit longitudinalen Ultraschallwellen. Auf diese Weise ist die Auswertung der nach Durchschallung des Schweißbereiches oder Reflexion an diesem von einem Ultraschallempfänger empfangenen Ultraschallwellen vereinfacht.

Die Wellenlänge der Ultraschallwellen ist in weiten Grenzen wählbar. Zweckmäßigerweise beträgt die Wellenlänge der Ultraschallwellen jedoch etwa 5 bis etwa 25 MHz.

Eine Weiterbildung der vorgenannten Ausführungsform sieht vor, dass der Ultraschallempfänger relativ zum Schweißbereich ultraschallsenderseitig angeordnet ist. Bei dieser Ausführungsform empfängt der Ultraschallempfänger die an dem Schweißbereich reflektierten Ultraschallwellen.

Gemäß einer weiteren Ausgestaltung der Erfindung ist der Ultraschallempfänger zusammen mit dem Ultraschallsender in einem Prüfkopf aufgenommen. Hierdurch ist ein besonders kompakter Aufbau erzielbar. Der Ultraschallempfänger und der Ultraschallsender können auch getrennt in zwei Prüfköpfen angeordnet sein.

Es zeigt
Fig. 1 in geschnittener Seitenansicht ein erstes Ausführungsbeispiel einer erfindungsgemäßen Anordnung und
Fig. 2 in gleicher Darstellung wie Fig. 1 ein zweites Ausführungsbeispiel der erfindungsgemäßen Anordnung.

In den Figuren der Zeichnung sind gleiche oder sich entsprechende Bauteile mit denselben Bezugszeichen versehen.

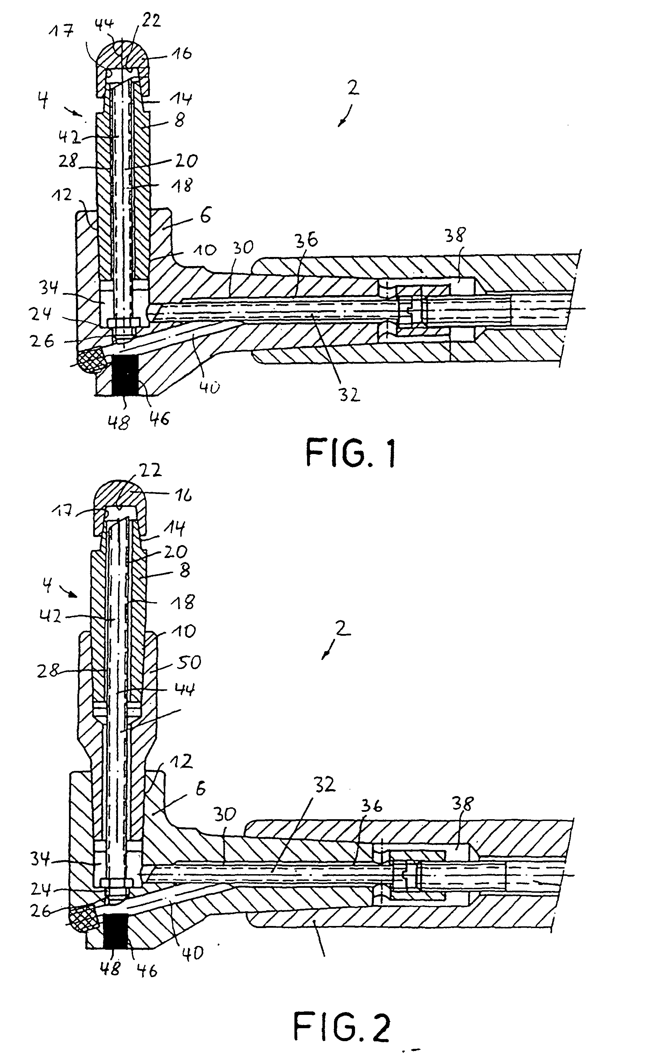

In Fig. 1 ist ein erstes Ausführungsbeispiel einer erfindungsgemäßen Anordnung 2 dargestellt, bei der eine Schweißelektrode 4 von einem Elektrodenhalter 6 gehalten ist. Die Schweißelektrode 4 weist einen Elektrodenschaft 8 auf, der mit einer sich zu seinem einen Ende hin konisch verjüngenden Außenfläche 10 in einer konischen Innenfläche 12 des Elektrodenhalters 6 gehalten ist. An seinem dem Elektrodenhalter 6 abgewandten Ende weist der Elektrodenschaft 8 eine weitere sich konisch verjüngende Außenfläche 14 auf, auf der eine Elektrodenkappe 16 mit einer konischen Innenfläche 17 gehalten ist.

Der Elektrodenschaft 8 weist eine zentrische Bohrung 18 auf, durch die sich ein zu der Bohrung 18 koaxiales Rohrteil 20 erstreckt, das in weiter unten näher beschriebener Weise zur Zuführung eines Kühlmittels zu einer Innenseite 22 der Elektrodenkappe 16 dient. Das Rohrteil 20 ist an seinem der Elektrodenkappe 16 abgewandten Ende mit einem Außengewinde 24 versehen, mit dem es in eine Gewindebohrung 26 des Elektrodenhalters 6 eingeschraubt ist. Der Außendurchmesser des Rohrteiles 20 ist geringer als die lichte Innenweite der Bohrung 18 des Elektrodenschaftes 8, derart, daß zwischen der Innenwandung der Bohrung 18 und der Außenwandung des Rohrteiles 20 ein Ringspalt 28 zur Abführung von Kühlmittel von der Innenseite 22 der Elektrodenkappe 16 gebildet ist.

Der Elektrodenhalter 6 weist eine zu der zentrischen Bohrung 18 des Elektrodenschaftes 16 senkrecht verlaufende Bohrung 30 auf, durch die sich ein zweites Rohrteil 32 erstreckt, das mit einem mit dem Ringspalt 28 in Verbindung stehenden Ringraum 34 in Verbindung steht und zur Abführung von Kühlmittel von der Elektrodenkappe 16 dient. Im Bereich ihres dem Ringraum 34 zugewandten Endes entspricht die lichte Innenweite der Bohrung 30 dem Außendurchmesser des zweiten Rohrteiles 32, derart, daß das zweite Rohrteil 32 in diesem Bereich dicht in der Bohrung 30 aufgenommen ist. Im Bereich ihres dem Ringraum 34 abgewandten Endes weist die Bohrung 30 eine lichte Innenweite auf, die größer ist als der Außendurchmesser des zweiten Rohrteiles 32, derart, daß in diesem Bereich zwischen der Innenwandung der Bohrung 30 und der Außenfläche des zweiten Rohrteiles 30 ein Ringspalt 36 gebildet ist. Der Ringspalt 36 steht an seinem dem Ringraum 34 abgewandten Ende mit einem Ringraum 38 sowie mit einem Zuführkanal 40 in Verbindung, der mit einem in dem ersten Rohrteil 20 gebildeten Kanal 42 in Verbindung steht.

Im Bereich des Zuführkanales 40 weist der Elektrodenhalter 6 eine zu der in Fig. 1 durch eine strichpunktierte Linie 44 symbolisierten Längsachse des Kanales 42 koaxiale Ausnehmung 46 auf, die bei diesem Ausführungsbeispiel durch eine sich von dem Zuführkanal 40 zur Außenseite des Elektrodenhalters 6 erstreckende Durchgangsbohrung gebildet ist. In der Ausnehmung 46 ist ein Prüfkopf 48 in dem Elektrodenhalter 6 aufgenommen, der bei Betrieb der Anordnung 2 longitudinale Ultraschallwellen erzeugt und in den Kanal 42 einstrahlt, wobei sich die longitudinalen Ultraschallwellen in Axialrichtung des Kanales 42 von dem Prüfkopf 48 zu der Elektrodenkappe 16 hin ausbreiten.

Der Prüfkopf 48 ist bei diesem Ausführungsbeispiel in die Ausnehmung 46 eingesteckt. Er kann jedoch auch in die Ausnehmung 46 eingeklebt oder mit einem Außengewinde in ein Innengewinde der Ausnehmung 46 eingeschraubt sein.

Der Prüfkopf 48 mit dem Ultraschallsender ist über in der Zeichnung nicht dargestellte Zuleitungen mit einer ebenfalls in der Zeichnung nicht dargestellten Steuerschaltung verbunden, die den Prüfkopf 48 bei Betrieb der Anordnung 2 derart ansteuert, daß der Ultraschallsender Ultraschallwellen mit einer vorgebbaren Wellenlänge bzw. Frequenz erzeugt, die beispielsweise im Bereich von etwa 5 bis etwa 25 MHz liegen kann.

Die Funktionsweise der Anordnung 2 ist wie folgt:

Bei Betrieb der Anordnung befinden sich zwei oder mehrere miteinander zu verschweißende Teile zwischen der Elektrodenkappe 16 der Schweißelektrode 4 und einer Elektrodenkappe einer in der Zeichnung nicht dargestellten weiteren Schweißelektrode. Über die Elektrodenkappen 16 wird über in der Zeichnung nicht näher dargestellte, dem Fachmann jedoch bekannte Mittel ein Schweißstrom in den Schweißbereich eingeleitet, so daß sich im Schweißbereich eine Schweißlinse bildet.

Zur Prüfung der sich hierbei bildenden Schweißverbindung strahlt der Ultraschallsender des Prüfkopfes 48 im wesentlichen longitudinale Ultraschallwellen in den Kanal 42 ein, die sich entlang der Längsachse 44 des Kanales 42 zu der Elektrodenkappe 16 und durch diese hindurch in den Schweißbereich ausbreiten und den Schweißbereich durchschallen. Nach Durchschallung des Schweißbereiches und Dämpfung im Schweißbereich werden die Ultraschallwellen von einem in der Zeichnung nicht dargestellten, an der anderen Schweißelektrode angeordneten weiteren Prüfkopf mit einem Ultraschallempfänger empfangen. Der weitere Prüfkopf kann in ähnlicher Weise an der anderen Schweißelektrode angeordnet sein, wie der Prüfkopf 48 an der Schweißelektrode 4 angeordnet ist.

Die von dem Ultraschallempfänger empfangenen Ultraschallwellen können während des Schweißvorganges kontinuierlich ausgewertet werden, um Aufschluß über den Verlauf des Schweißvorganges zu erhalten und ggf. die Parameter des Schweißvorganges, beispielsweise den Schweißstrom und/oder die Schweißzeit so anzupassen, daß eine sichere Schweißverbindung erzielt wird.

Während des Schweißvorganges wird der Elektrodenkappe 16 Kühlwasser als Kühlmittel zugeführt, das von einer in der Zeichnung nicht dargestellten Kühlmittelversorgung über den Ringraum 38 und den Ringspalt 36 in den Zuführkanal 40 und von dort durch den Kanal 42 im Inneren des ersten Rohrteiles 20 zu der Innenseite 22 der Elektrodenkappe 16 strömt und diese kühlt. Nach Kühlung der Elektrodenkappe 16 strömt das erwärmte Kühlwasser von der Innenseite 22 der Elektrodenkappe 16 durch den Ringspalt 28 in den Ringraum 34 und von dort durch das Innere des zweiten Rohrteiles 32 zurück zu der in der Zeichnung nicht dargestellten Kühlmittelversorgung.

Erfindungsgemäß dient der Kanal 42 somit einerseits zur Zuführung von Kühlwasser zu der Elektrodenkappe 16, andererseits auch als Schallkanal für die Ausbreitung der von dem Ultraschallsender des Prüfkopfes 48 abgestrahlten Ultraschallwellen.

Da die Ultraschallwellen bei der Ausbreitung durch das in dem Kanal 42 strömende Kühlwasser nur in geringem Maße gedämpft bzw. reflektiert werden, ist eine Auswertung der Ultraschallwellen nach Durchschallung des Schweißbereiches mit hoher Amplitude und damit mit hoher Genauigkeit ermöglicht.

Durch die Befestigung des Prüfkopfes 48 im Inneren des Elektrodenhalters 6 ist der Prüfkopf 48 gegen mechanische Beschädigungen zuverlässig geschützt. Dadurch, daß die Ausnehmung 46 von außen zugänglich ist, kann der Prüfkopf 48 bei Bedarf in schneller und einfacher Weise ausgebaut werden.

Falls anstelle eines Durchschallungssignals ein Reflexionssignal der an dem Schweißbereich reflektierten Ultraschallwellen gemessen werden soll, so kann der Prüfkopf 48 neben einem Ultraschallsender zusätzlich einen Ultraschallempfänger aufweisen, der an dem Schweißbereich oder an den Grenzflächen der zu verschweißenden Bauteile reflektierte Ultraschallwellen empfängt.

In Fig. 2 ist ein zweites Ausführungsbeispiel der erfindungsgemäßen Anordnung 2 dargestellt, das sich von dem Ausführungsbeispiel gemäß Fig. 1 im wesentlichen dadurch unterscheidet, daß der Elektrodenschaft 8 der Schweißelektrode 4 nicht unmittelbar, sondern über ein Verlängerungsteil 50 mit dem Elektrodenhalter 6 verbunden ist.

Die in den Fig. 1 und 2 dargestellte Art und Weise der Zuführung von Kühlmittel zu der Elektrodenkappe 16 ist auch bei Schweißelektroden anwendbar, die keinen Prüfkopf 48 aufweisen, bei denen also keine Prüfung der Schweißverbindung während des Schweißvorganges erfolgt.

## Patentansprüche

1. Schweißelektrode mit einer Anordnung zur Ultraschalleinbringung zur Prüfung von Schweißverbindungen, insbesondere Widerstandsschweißverbindungen,
mit einem Ultraschallsender, welcher zur Beaufschlagung des Schweißbereiches mit Ultraschallwellen die Ultraschallwellen axial in einen Kühlkanal der Schweißelektrode einstrahlt, der mit einem schallübertragenden Medium gefüllt ist, und mit einem beabstandet von dem Schweißbereich angeordneten Ultraschallempfänger zur Aufnahme der durch den Schweißbereich gelaufenen Ultraschallwellen,
**dadurch gekennzeichnet, dass**
der Ultraschallsender (48) zur axialen Einleitung von longitudinalen Ultraschallwellen außen an einem Elektrodenhalter (6) der Schweißelektrode (9) in axialer Ausrichtung mit dem Kühlkanal (42) angeordnet ist.

2. Schweißelektrode nach Anspruch 1, **dadurch gekennzeichnet, dass** die Schweißelektrode (4) zweiteilig ausgebildet ist und eine Elektrodenkappe (16) aufweist.

3. Schweißelektrode nach einem der vorhergehenden Ansprüche, **dadurch gekennzeichnet, dass** die Anordnung einen Ultraschallempfänger zum Empfangen von Ultraschallwellen nach Reflexion am Schweißbereich aufweist.

4. Schweißelektrode nach einem der vorhergehenden Ansprüche, **dadurch gekennzeichnet, dass** der Ultraschallsender und/oder der Ultraschallempfänger wenigstens teilweise in dem Elektrodenhalter (6) der Schweißelektrode (4) oder einem damit verbundenen Teil aufgenommen ist bzw. sind.

5. Schweißelektrode nach einem der vorhergehenden Ansprüche, **dadurch gekennzeichnet, dass** sich der Kanal (42) durch den Elektrodenhalter (6) und/oder ein damit verbundenes Teil (50) und/oder einen Elektrodenschaft (8) der Schweißelektrode (4) erstreckt.

6. Schweißelektrode nach einem der vorhergehenden Ansprüche, **dadurch gekennzeichnet, dass** der Kanal (42) im Wesentlichen über seine gesamte Länge einen konstanten Querschnitt aufweist oder konisch ausgebildet ist.

7. Schweißelektrode nach Anspruch 6, **dadurch gekennzeichnet, dass** der Kanal (42) in einem Teil mit einer zylindrischen Innenwandung gebildet ist.

8. Schweißelektrode nach einem der vorhergehenden Ansprüche, **dadurch gekennzeichnet, dass** der Kanal (42) wenigstens teilweise in einem sich durch den Elektrodenhalter (6) und/oder durch ein mit dem Elektrodenhalter (6) verbundenes Teil (50) und/oder den Elektrodenschaft (8) erstreckenden Rohrteil (20) zur Zuführung von Kühlmittel zur Innenseite (22) der Elektrodenkappe (16) und/oder zur Abführung von Kühlmittel von der Innenseite (22) der Elektrodenkappe (16) gebildet ist.

9. Schweißelektrode nach einem der vorhergehenden Ansprüche, **dadurch gekennzeichnet, dass** der Ultraschallsender und/oder der Ultraschallempfänger lösbar mit dem Elektrodenhalter (6) verbunden ist bzw. sind.

10. Schweißelektrode nach einem der vorhergehenden Ansprüche, **dadurch gekennzeichnet, dass** der Elektrodenhalter (6) auf seiner der Elektrodenkappe (16) abgewandten Seite wenigstens eine mit dem Kanal (42) in Verbindung stehende, vorzugsweise von der Außenseite der Anordnung (2) zugängliche Ausnehmung (46) zur Aufnahme des Ultraschallsenders und/oder des Ultraschallempfängers aufweist.

11. Schweißelektrode nach Anspruch 10, **dadurch gekennzeichnet, dass** die Ausnehmung (46) zur Längsachse (44) des Kanals (42) koaxial ist.

12. Schweißelektrode nach Anspruch 10 oder 11, **dadurch gekennzeichnet, dass** der Ultraschallsender und/oder der Ultraschallempfänger in die Ausnehmung (46) eingeklebt oder eingesteckt ist bzw. sind oder mit einem Außengewinde in ein Innengewinde der Ausnehmung (46) eingeschraubt ist bzw. sind.

13. Schweißelektrode nach einem der vorhergehenden Ansprüche, **dadurch gekennzeichnet, dass** der Ultraschallsender den Schweißbereich mit longitudinalen Ultraschallwellen beaufschlagt.

14. Schweißelektrode nach einem der vorhergehenden Ansprüche, **dadurch gekennzeichnet, dass** die Frequenz der Ultraschallwellen etwa 5 bis 25 MHz beträgt.

15. Schweißelektrode nach einem der Ansprüche 4 bis 14, **dadurch gekennzeichnet, dass** der Ultraschallempfänger relativ zum Schweißbereich ultraschallsenderseitig angeordnet ist.

16. Schweißelektrode nach einem der Ansprüche 4 bis 15, **dadurch gekennzeichnet, dass** der Ultraschallempfänger zusammen mit dem Ultraschallsender in einem Prüfkopf (48) aufgenommen ist oder daß der Ultraschallempfänger und der Ultraschallsender getrennt in zwei Prüfköpfen angeordnet sind.

## Claims

1. Welding electrode with a configuration for the ultrasound introduction for the testing of weld joints, in particular resistance welded joints,
with an ultrasound transmitter which irradiates the ultrasonic waves axially into a cooling channel of the welding electrode for the impingement of the welding region with ultrasonic waves, the cooling channel being filled with a sound-transmitting medium, and with an ultrasound receiver disposed at a spacing from the welding region for the reception of the ultrasonic waves which have passed throught the welding region.
**characterized in that**
the ultrasound transmitter (48) for the axial introduction of longtudinal ultrasonic waves is provided outside at an electrode holder (6) of the welding electrode (9) in axial alignment with the cooling channel (42).

2. Welding electrode according to claim 1, **characterized in that** the welding electrode (4) is developed in two components and comprises an electrode cap (16).

3. Welding electrode according to one of the preceding claims, **characterized in that** the configuration comprises an ultrasound receiver for the reception of ultrasonic waves after reflection on the welding region.

4. Welding electrode according to one of the preceding claims, **characterized in that** the ultrasound transmitter and/or the ultrasound receiver is/are at least partially received in the electrode holder (6) of the welding electrode (4) or a component connected therewith.

5. Welding electrode according to one of the preceding claims, **characterized in that** the channel (42) extends through the electrode holder (6) and/or a component (50) connected therewith and/or an electrode shaft (8) of the welding electrode (4).

6. Welding electrode according to one of the preceding claims, **characterized in that** the channel (42) has substantially over its entire length a constant cross section or is developed conically.

7. Welding electrode according to claim 6, **characterized in that** the channel (42) in a portion is formed with a cylindrical inner wall.

8. Welding electrode according to one of the preceding claims, **characterized in that** the channel (42) is formed at least partially in a tube component (20) extending through the electrode holder (6) and/or through a component (50) connected with the electrode holder (6) and/or the electrode shaft (8) for supplying cooling means to the inside (22) of the electrode cap (16) and/or for the outlet of cooling means from the inside (22) of the electrode cap (16).

9. Welding electrode according to one of the preceding claims, **characterized in that** the ultrasound transmitter and/or ultrasound receiver is/are detachably connected with the electrode holder (6).

10. Welding electrode according to one of the preceding claims, **characterized in that** the electrode holder (6) comprises on its side facing away from the electrode cap (16) at least one recess (46) connected with the channel (42), preferably accessible from the outside of the configuration (2), for the reception of the ultrasound transmitter and/or the ultrasound receiver.

11. Welding electrode according to claim 10, **characterized in that** the recess (46) is coaxial with the longitudinal axis (44) of the channel (42).

12. Welding electrode according to claim 10 or 11, **characterized in that** the ultrasound transmitter and/or the ultrasound receiver is/are adhered or plugged into the recess (46) or is/are screwed with outer threads into inner threads of the recess (46).

13. Welding electrode according to one of the preceding claims, **characterized in that** the ultrasound transmitter impinges the welding region with longitudinal ultrasonic waves.

14. Welding electrode according to one of the preceding claims, **characterized in that** the frequency of the ultrasonic waves is approximately 5 to approximately 25 MHz.

15. Welding electrode according to one of claims 4 to 14, **characterized in that** the ultrasound receiver is disposed at the ultrasound transmitter side relative to the welding region.

16. Welding electrode according to one of claims 4 to 15, **characterized in that** the ultrasound receiver, together with the ultrasound transmitter, is received in a test head (48) or that the ultrasound receiver and the ultrasound transmitter are disposed separately in two test heads.

## Revendications

1. Electrode de soudage avec un dispositif de mise en oeuvre d'ultrasons pour le contrôle de liaisons soudées, en particulier de liaisons soudées par résistance,
comportant un émetteur d'ultrasons qui, pour faire agir des ondes ultrasonores sur la zone de soudage, introduit les ondes ultrasonores axialement dans un canal de refroidissement de l'électrode de soudage lequel est rempli d'un milieu transmettant les sons, et comportant un récepteur d'ultrasons disposé à distance de la zone de soudage pour recevoir les ondes ultrasonores ayant traversé la zone de soudage,
**caractérisée en ce que**
l'émetteur d'ultrasons (48) est disposé, pour l'introduction axiale d'ondes ultrasonores longitudinales, à l'extérieur sur un porte-électrode (6) de l'électrode de soudage (9), dans une orientation axiale avec le canal de refroidissement (42).

2. Electrode de soudage selon la revendication 1, **caractérisée en ce que** l'électrode de soudage (4) est réalisée en deux parties et comporte un capuchon d'électrode (16).

3. Electrode de soudage selon l'une des revendications précédentes, **caractérisée en ce que** le dispositif comporte un récepteur d'ultrasons pour la réception d'ondes ultrasonores après réflexion sur la zone de soudage.

4. Electrode de soudage selon l'une des revendications précédentes, **caractérisée en ce que** l'émetteur d'ultrasons et/ou le récepteur d'ultrasons est ou sont reçus au moins en partie dans le porte-électrode (6) de l'électrode de soudage (4) ou dans une partie reliée à celui-ci.

5. Electrode de soudage selon l'une des revendications précédentes, **caractérisée en ce que** le canal (42) s'étend à travers le porte-électrode (6) et/ou une partie (50) reliée à celui-ci et/ou une tige d'électrode (8) de l'électrode de soudage (4).

6. Electrode de soudage selon l'une des revendications précédentes, **caractérisée en ce que** le canal (42) présente une section transversale constante sensiblement sur toute sa longueur ou est réalisé coniquement.

7. Electrode de soudage selon la revendication 6, **caractérisée en ce que** le canal (42) est formé dans une partie présentant une paroi intérieure cylindrique.

8. Electrode de soudage selon l'une des revendications précédentes, **caractérisée en ce que** le canal (42) est formé au moins en partie dans un élément tubulaire (20) s'étendant à travers le porte-électrode (6) et/ou à travers une partie (50) reliée au porte-électrode (6) et/ou à travers la tige d'électrode (8), pour l'amenée d'un agent de refroidissement à la face intérieure (22) du capuchon d'électrode (16) et/ou pour évacuer l'agent de refroidissement depuis la face intérieure (22) du capuchon d'électrode (16).

9. Electrode de soudage selon l'une des revendications précédentes, **caractérisée en ce que** l'émetteur d'ultrasons et/ou le récepteur d'ultrasons est ou sont reliés de manière séparable au porte-électrode (6).

10. Electrode de soudage selon l'une des revendications précédentes, **caractérisée en ce que** le porte-électrode (6) présente, sur sa face tournée vers le capuchon d'électrode (16), au moins un évidement (46) se trouvant en liaison avec le canal (42), accessible de préférence depuis le côté extérieur du dispositif (2), pour recevoir l'émetteur d'ultrasons et/ou le récepteur d'ultrasons.

11. Electrode de soudage selon la revendication 10, **caractérisée en ce que** l'évidement (46) est coaxial à l'axe longitudinal (44) du canal (42).

12. Electrode de soudage selon la revendication 10 ou 11, **caractérisée en ce que** l'émetteur d'ultrasons et/ou le récepteur d'ultrasons est ou sont collés ou emboîtés dans l'évidement (46), ou vissés par un filetage extérieur dans un taraudage de l'évidement (46).

13. Electrode de soudage selon l'une des revendications précédentes, **caractérisée en ce que** l'émetteur d'ultrasons agit sur la zone de soudage par des ondes ultrasonores longitudinales.

14. Electrode de soudage selon l'une des revendications précédentes, **caractérisée en ce que** la fréquence des ondes ultrasonores est comprise approximativement entre 5 et 25 MHz.

15. Electrode de soudage selon l'une des revendications 4 à 14, **caractérisée en ce que** le récepteur d'ultrasons est disposé sur le côté de l'émetteur d'ultrasons par rapport à la zone de soudage.

16. Electrode de soudage selon l'une des revendications 4 à 15, **caractérisée en ce que** le récepteur d'ultrasons avec l'émetteur d'ultrasons est reçu dans une tête de contrôle (48), ou **en ce que** le récepteur d'ultrasons et l'émetteur d'ultrasons sont disposés séparés dans deux têtes de contrôle.
